# EUROPÄISCHE PATENTSCHRIFT

(11) **EP 2 149 191 B1**
(45) Veröffentlichungstag und Bekanntmachung des Hinweises auf die Patenterteilung: **08.01.2014**
(21) Anmeldenummer: 08759690.4
(22) Anmeldetag: 16.05.2008
(51) Int. Cl.: H02K 15/00, H02K 3/487

(54) **VERFAHREN ZUM FIXIEREN VON WICKLUNGSSTÄBEN IN NUTEN ELEKTRISCHER MASCHINEN ODER VON GENERATOREN**
METHOD FOR SECURING WINDING BARS IN GROOVES OF ELECTRIC MOTORS OR GENERATORS
PROCÉDÉ POUR BLOQUER DES BARRES D'ENROULEMENT DANS DES ENCOCHES DE MACHINES ÉLECTRIQUES OU DE GÉNÉRATEURS

(30) Priorität: 18.05.2007 WO PCT/CH2007/000256
(43) Veröffentlichungstag der Anmeldung: 03.02.2010
(73) Patentinhaber: ABB Research Ltd., 8050 Zürich (CH)
(72) Erfinder: STOLL, Dieter, CH-5507 Mellingen (CH); PIUR, Armin, CH-8957 Spreitenbach (CH); SCHAAL, Stéphane, F-68510 Sierentz (FR)
(74) Vertreter: ABB Patent Attorneys
(86) Internationale Anmeldenummer: PCT/EP2008/056053
(87) Internationale Veröffentlichungsnummer: WO 2008/142024

(56) Entgegenhaltungen:
- WO-A-03/044926
- DE-A1- 1 463 872
- FR-A- 2 708 803
- GB-A- 1 044 574
- JP-A- 8 116 638
- JP-A- 60 091 835
- US-A1- 2005 200 212

## Beschreibung

### TECHNISCHES GEBIET

Die vorliegende Erfindung betrifft ein Verfahren zur Fixierung von Leitern oder Wicklungsstäben in Nuten von elektrischen Maschinen oder von Generatoren sowie eine Vorrichtung zur Durchführung dieses Verfahrens.

### STAND DER TECHNIK

In einer elektrischen Maschine werden die Leiterstäbe in Nuten im Stator eingelegt. Die Leiterstäbe selbst sind dabei elektrisch isoliert und werden in diesen Nuten versiegelt. Ähnliches gilt für die Leiterstäbe in einem Rotor einer elektrischen Maschine oder eines Generators.

Aufgrund der Wechselwirkung des durch diese Leiter fliessenden elektrischen Stromes und des auf diese einwirkenden magnetischen Feldes wirken Kräfte auf die Leiter in unterschiedlicher Richtung. Entsprechend ist es absolut entscheidend, die Leiterstäbe in diesen Schlitzen spielfrei zu lagern, da ansonsten eine Abnützung von Stator und/oder Leiterstäben unvermeidlich ist.

Diese Fixierung innerhalb der Nuten erfolgt durch die Verwendung von Keilen meist in Kombination mit einem vorgängigen Einpressen der Leiterstäbe in die Nuten. Im Falle der meisten Befestigungsanordnungen werden die Leiterstäbe gegen den Nutboden durch Verwendung von Kompensationsstreifen gepresst, und es gibt verschiedene Ansätze, um die sukzessive Lösung dieser Befestigung beim Betrieb zu verhindern.

Einer der Ansätze zur nachhaltigen Fixierung der Leiterstäbe in den Nuten ist in der DE 21 657 27 beschrieben. Hier wird vorgeschlagen, zur Fixierung von Wicklungsstäben in Nuten elektrischer Maschinen nicht nur im Bereich der Nutöffnung einen Nutverschlusskeil anzuordnen sondern zusätzlich auch noch eine Spannfeder, wobei diese Feder aus einer in Längsrichtung gewellten Blattfeder besteht und eine bis zu 70% ihres maximalen Federweges möglichst lineare Federkennlinie aufweist. Die Blattfeder wird bei ihrem Einbau in die Nut zusammengedrückt und der entstehende Federdruck wird so ausgelegt, dass er über dem pulsierenden Gesamtdruck liegt. Eine derartige Feder ist also zwischen dem Nutverschlusskeil und den darunter liegenden, in der Nut eingepressten Leiterstäben angeordnet.

Ein anderer Ansatz besteht darin, die Nutverschlusskeile zweiteilig und doppelt abgeschrägt auszubilden. Derartige Konstruktionen sind bspw. in der CH 52 55 81 beschrieben, der hier beschriebene Keil besteht aus einem oberen prismatischen Körper, an dessen unterem Teil eine Fläche in Längsrichtung geneigt verläuft und einem unteren prismatischen Körper, dessen obere, dem oberen prismatischen Körper zugekehrte Fläche gegenüber der Steigung der unteren Fläche des oberen prismatischen Körpers in entgegengesetzter Richtung geneigt verläuft. Die Neigung dieser beiden Teile des Keiles ist dabei in Verlaufsrichtung der Nut, das heisst typischerweise parallel zu Achse der elektrischen Maschine angeordnet, und je nach dem wird entweder zuerst der obere Teil des Keiles eingeschoben und anschliessend der Untere unter sukzessiver Pressung unter diesen oberen Keil geschoben, oder umgekehrt. Eine ähnliche Konstruktion ist in der US 5 598 049 beschrieben, hier wird der untere Teil des Keiles bspw. konvex ausgebildet und der obere Teil des Keiles konkav jeweils im geneigten Abschnitt, was offenbar erlaubt, die Befestigung der Leiterstäbe weiter zu erhöhen.

Ein dritter weiterer Ansatz besteht darin, zwischen den Leitern und dem Nutverschlusskeil vorgespannte Nutenverschlussteile vorzusehen, wie sie bspw. in der DE 32 414 10 beschrieben sind. In diesem Dokument wird ein derartiges vorgespanntes Nutenverschlussteil beschrieben, welches aus einer gewellten Blattfeder besteht, welche gegen ein dieses in einem vorgespannten Zustand haltendes Gegenelement mit einem thermoaktivierbaren Kleber in seiner Spannung fixiert ist. Dieses vorgespannte Nutenverschlussteil wird nach Einlegen der Leiterstäbe in die Nut auf diese aufgelegt und anschliessend der Nutverschlusskeil eingeschoben. Anschliessendes Erwärmen der Konstruktion und insbesondere der verklebten Nutenverschlussteile führt dazu, dass sich die Verbindung des wärmeaktivierbaren Klebers löst und die Spannung gewissermassen freigesetzt wird. Eine ähnliche Konstruktion ist in der US 5 325 008 beschrieben.

Problematisch an den beiden erst genannten Ansätzen, das heisst an der Verwendung von gewellten Blattfedern resp. der Verwendung von zweiteiligen doppelt geneigten Nutverschlusskeilen ist die Tatsache, dass nur kurze Teile für die Verkeilung der Leiter in der elektrischen Maschine verwendet werden können, da ansonsten eine übermässig hohe Reibung auftritt. Dies führt dazu, dass viel Zeit für den Zusammenbau des Stators aufgewendet werden muss und entsprechend die Aufbaukosten hoch sind. Zudem ist der Federweg in der Regel gering und entsprechend können herstellungsbedingte Toleranzen sowohl der Statorgeometrie selber als auch der Leiter resp. der Isolationen dieser beiden Elemente in der Regel manuell aufgefangen werden durch die Einfügung von speziellen Füllstreifen an den Seitenwänden, dem Boden und gegebenenfalls auch auf den Leiterstäben.

Problematisch am dritten Ansatz, das heisst der Verwendung von vorgespannten Nutenverschlussteilen, ist die Tatsache, dass bei diesen Elementen eine nachträgliche zusätzliche Befestigung, gewissermassen ein Nachspannen, beinahe unmöglich ist. Die Keile müssen bei der Verwendung von solchen Elementen bei jedem Wartungsintervall ersetzt werden, wenn die Federkraft durch das Absetzen der Isolationen der Leiter in einem Mass abgenommen hat, welche den weiteren sicheren Betrieb bedrohen könnte.

### DARSTELLUNG DER ERFINDUNG

Der Erfindung liegt demnach u.a. der Gegenstand zugrunde, ein verbessertes Verfahren zur Fixierung von Leitern oder Wicklungsstäben in Nuten von elektrischen Maschinen oder von Generatoren zur Verfügung zu stellen. Des weiteren sollen die entsprechenden Hilfsmittel für dieses Verfahren zur Verfügung gestellt werden, insbesondere ein verbesserter Keil zur Durchführung des Verfahrens.

Dieser Gegenstand wird dadurch erreicht, dass bei einem Verfahren zur Fixierung von Leiterstäben in einer Nut in einem Stator oder einem Rotor einer elektrischen Maschine oder eines Generators wie folgt vorgegangen wird:
- ein oder mehrere Leiterstäbe werden in die Nut respektive in den Nutboden eingelegt
- dann wird wenigstens ein vorgespanntes, sich in Verlaufsrichtung der Nut erstreckendes (vorzugsweise im wesentlichen über die gesamte Nut erschreckendes) Einlageelement in die Nut eingelegt, typischerweise auf die Leiterstäbe aufgelegt
- dann wird die Nut durch im Bereich der Nutöffnung angeordnete Keile geschlossen, wobei typischerweise derartige Keile in entsprechende Abschrägungen der Seitenflanken der Nut eingreifen;
- anschliessend wird das Einlageelement durch Einwirkung von Wärme (auch möglich sind mechanische Vibrationen und/oder Schockwellen und/oder elektromagnetische Wellen, beispielsweise Mikrowellen, UV, VIS oder IR-Einstrahlung, und/oder eine chemische Reaktion, beispielsweise durch Zugabe von Wasser, einem Lösungsmittel oder einer Säure) derart teilweise entspannt resp. freigegeben wird, dass ein gegebenenfalls vorhandener Freiraum zwischen Leiterstäben und Keil durch das teilweise entspannte Einlageelement wenigstens teilweise überbrückt wird und/oder die Leiterstäbe über das entspannte Einlageelement vom Keil in die Nut gepresst werden.
- anschliessend wird in einem zusätzlichen Schritt ein Spannelement im oder am Keil (oder alternativ oder zusätzlich im oder am Einlageelement) derart verschoben und/oder verdreht, dass entweder ein gegebenenfalls vorhandener Abstand zwischen Keil und Einlageelement durch dieses Spannelement überbrückt wird und/oder die Spannung des Einlageelementes erhöht wird. Anzumerken ist dabei, dass dieser zusätzliche Schritt (welcher nicht der letzte Schritt zu sein braucht) nicht unmittelbar nach der Durchführung der oben angegebenen Schritte erfolgen muss, sondern er kann beispielsweise auch, beispielsweise im Sinne einer erneuten Herstellung der Spannung nach einer gewissen Betriebszeit, im Rahmen von Unterhaltsarbeiten wesentlich später durchgeführt werden.

Gemäss einer ersten bevorzugten Ausführungsform ist dieses Verfahren dadurch gekennzeichnet, dass es sich beim Spannelement um einen oder mehrere im wesentlichen in Nutrichtung im Keil in einer oder mehreren Gewindebohrungen eingelassene Gewindebolzen oder Schrauben handelt, welche in Richtung Nutboden eingeschraubt werden. Beispielsweise ist es möglich, entlang der Verlaufsrichtung der Nut in einer oder mehreren Reihen eine Vielzahl von derartigen Gewindebolzen respektive Schrauben anzuordnen, welche in Durchgangs-Gewindebohrungen angeordnet sind.

Alternativ oder zusätzlich ist es möglich, dass es sich beim Spannelement um einen oder mehrere im oder am Keil angeordnete Exzenter handelt, welche verdreht werden können, so dass die Spannung erhöht wird.

Alternativ oder zusätzlich ist es möglich, dass der Keil auf seiner dem Nutboden zugewandten Unterseite wenigstens abschnittsweise eine geneigte untere Fläche aufweist, und dass es sich beim Spannelement um einen ebenfalls mit einer gegenläufig geneigten, der geneigten Fläche des Keiles zugewandten oberen Fläche ausgebildeten Spannkeil handelt, welcher eingeschoben wird, und/oder dass das Einlageelement auf seiner dem Nutboden abgewandten Oberseite wenigstens abschnittsweise eine geneigte obere Fläche aufweist, und dass es sich beim Spannelement um einen ebenfalls mit einer gegenläufig geneigten, der geneigten Fläche des Einlageelementes zugewandten unteren Fläche ausgebildeten Spannkeil handelt, welcher eingeschoben wird.

Die drei oben angegebenen Möglichkeiten von Spannelementen können selbstverständlich auch in Kombination angewendet werden, so ist es möglich, sowohl Gewindebolzen als auch Spannkeile vorzusehen, beispielsweise in Abhängigkeit der Position entlang der Verlaufsrichtung der Nut, vorteilhaft ist es beispielsweise, wenn am Rande der Nut in Verlaufsrichtung, wo die Nut auch von der Seite zugänglich ist, derartige Spannkeile anzuordnen, und im dazwischen liegenden Bereich Gewindebolzen respektive Schrauben.

Beim Einlageelement handelt es sich vorzugsweise um ein Element umfassend ein oberes Flächenelement und ein unteres Flächenelement, wobei wenigstens eines dieser Flächenelemente als parallel oder senkrecht zur Verlaufsrichtung der Nut ein oder mehrfach gewellte Blattfeder ausgebildet ist (ist nur eines dieser Elemente als Blattfeder ausgebildet, so ist das andere Element vorzugsweise beispielsweise ein einfaches Blech oder eine Platte), und wobei diese Blattfeder im vorgespannten Zustand im wesentlichen flach ausgebildet ist. Besonders vorteilhaft ist es, wenn beide Flächenelemente als in entgegen gesetzter radialer Richtung gewellte Blattfeder ausgebildet sind.

Eine weitere bevorzugte Ausführungsform ist dadurch gekennzeichnet, dass die beiden Flächenelemente im vorgespannten Zustand über eine durch die wenigstens eine der Einwirkung, insbesondere bevorzugt durch Wärmeeinwirkung, lösbare Haftvermittlerschicht, Schraube(n), Niete(n), Klammer(n) und oder eine Kombination davon zusammengehalten werden. Bevorzugt ist beispielsweise eine Haftvermittlerschicht aus einem Material, welches oberhalb einer definierten Temperatur oder Temperaturbereich die Haftungseigenschaften im wesentlichen verliert (beispielsweise ein Polymer, welches dann seinen Glasübergangspunkt oder Schmelzpunkt überschreitet), bevorzugt ist aber auch eine Haftvermittlerschicht aus einem Material, welches bei Zugabe von Wasser oder einem anderen Lösungsmittel die Haftungseigenschaften verliert, sei es wegen der dadurch erfolgenden Verdünnung respektive Lösung oder infolge einer chemischen Reaktion.

Wie bereits oben erwähnt, ist es vorteilhaft und im Rahmen einer bevorzugten Ausführungsform auch bevorzugt, wenn der zusätzliche Schritt erst dann durchgeführt wird, wenn sich die durch das Einlageelement gewährleistete Spannung zwischen Leiterstäben und Keil durch Gebrauch und/oder Weiterbearbeitung von Stator oder Rotor abgebaut hat oder vollständig weggefallen ist unter Ausbildung eines Abstandes zwischen Keil und Einlageelement.

Des weiteren betrifft die vorliegende Erfindung einen Keil und ein Einlageelement zur Durchführung eines Verfahrens, wie es oben beschrieben wurde. Ein derartiger Keil resp. ein solches Einlageelement ist dadurch gekennzeichnet, dass im oder am Keil resp. oder im oder am Einlageelement ein Spannelement derart verschieblich und/oder verdrehbar angeordnet ist, dass entweder ein gegebenenfalls vorhandener Abstand zwischen Keil und Einlageelement durch dieses Spannelement überbrückt werden kann und/oder die Spannung des Einlageelementes erhöht werden kann.

Gemäss einer ersten bevorzugten Ausführungsform dieses Keiles und des Einlageelements sind diese derart ausgestaltet, dass es sich beim Spannelement um einen oder mehrere im wesentlichen in Nutrichtung im Keil in einer oder mehreren Gewindebohrungen eingelassene Gewindebolzen oder Schrauben handelt, welche in Richtung Nutboden eingeschraubt werden können und/oder dass es sich beim Spannelement um einen oder mehrere im oder am Keil angeordnete Exzenter handelt, welcher verdreht werden kann, und/oder der Keil auf seiner dem Nutboden zugewandten Unterseite wenigstens abschnittsweise eine geneigte untere Fläche aufweist, und dass es sich beim Spannelement um einen ebenfalls mit einer gegenläufig geneigten, der geneigten Fläche des Keiles zugewandten oberen Fläche ausgebildeten Spannkeil handelt, welcher eingeschoben werden kann.

Des weiteren betrifft die vorliegende Erfindung einen Stator oder Rotor, welcher mit einem Verfahren, wie es oben beschrieben worden ist, in seiner Spannung wieder eingestellt werden kann, insbesondere mit einem Keil, wie er oben beschrieben wurde.

Weitere bevorzugte Ausführungsformen der Erfindung sind in den abhängigen Ansprüchen beschrieben.

### KURZE ERLÄUTERUNG DER FIGUREN

Die Erfindung soll nachfolgend anhand von Ausführungsbeispielen im Zusammenhang mit den Zeichnungen näher erläutert werden. Es zeigen:
- Fig. 1: einen Schnitt senkrecht zur Verlaufsrichtung einer Nut mit eingelegten Leiterstäben und eingelegtem, noch nicht entspanntem Einlageelement sowie eingeschobenem Keil;
- Fig. 2: wie Fig. 1 aber mit entspanntem Einlageelement;
- Fig. 3: die beispielsweise beim Gebrauch erfolgende Verschiebung der Leiterstäbe in Richtung Nutboden;
- Fig. 4: die resultierende Konfiguration nach einem Vorgang gemäss Figur 3; und
- Fig. 5 bis 7: verschiedene Spannelemente zum zusätzlichen oder nachträglichen Verspannen der Leiterstäbe, wobei in Fig. 5 die Verwendung von Gewindebolzen, in Fig. 6 die Verwendung von Exzentern, und in Fig. 7 die Verwendung von Spannkeilen gezeigt wird.
- Fig. 8 bis 10: verschiedene Spannelemente zum zusätzlichen oder nachträglichen Verspannen der Leiterstäbe, wobei in Fig. 8 die Verwendung von Gewindebolzen, in Fig. 9 die Verwendung von Exzentern, und in Fig. 10 die Verwendung von Spannkeilen gezeigt wird, und als Einlageelement Tellerfedern verwendet werden.

### WEGE ZUR AUSFÜHRUNG DER ERFINDUNG

Wie bereits Eingangs erläutert, werden bei elektrischen Maschinen, insbesondere bei Statoren, aber gleichermassen bei Rotoren, beides sowohl bei elektrischen Maschinen sowie auch bei Generatoren, Leiter in so genannten Nuten durch Keile fixiert. In der Folge soll beispielhaft nur noch von einem Stator die Rede sein, ohne dass dies jedoch einschränkend für die vorliegende Erfindung ausgelegt werden soll. Ohnehin seien die nun anfolgenden Ausführungsbeispiele nur dahingehend zu verstehen, dass sie dokumentieren, wie die Erfindung durchgeführt werden kann, sie sollen jedoch nicht zur Einschränkung des Schutzbegehrens, wie es in den angehängten Ansprüchen definiert ist, hinzugezogen werden.

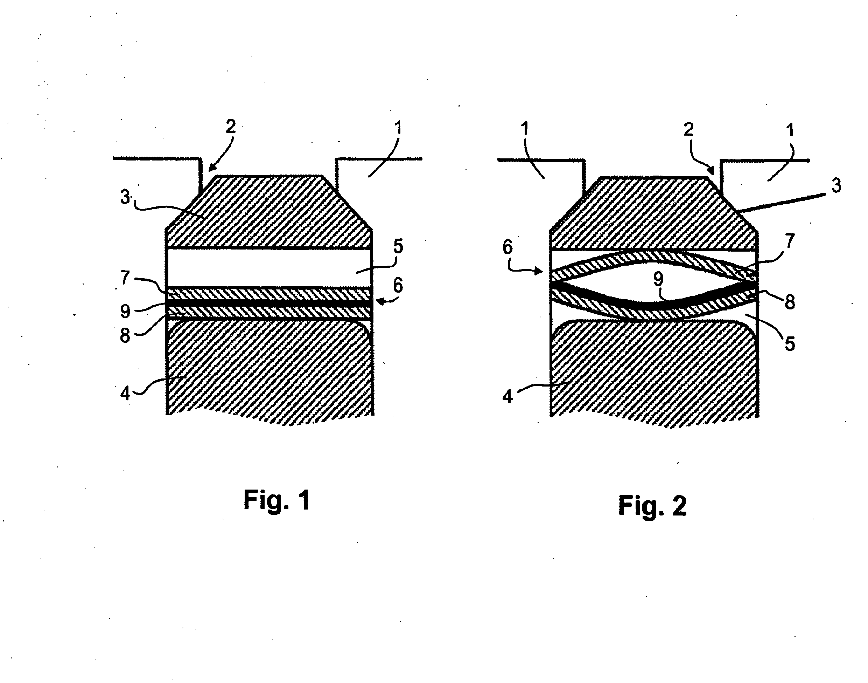

Figur 1 und 2 zeigen die Befestigung von Leiterstäben 4 in Nuten 2 eines Stators 1. In Figur 1 ist jene Situation gezeigt, welche vorliegt, wenn die Leiterstäbe 4 in die Nut eingelegt wurden, das heisst bis zum Nutboden durchgeschoben wurden, anschliessend ein Einlageelement 6 aufgelegt wurde und dann der Keil 3, welcher sich zur Nutöffnung hin gegen entsprechende Flanken auf beiden Seiten der Nut abstützt, eingeschoben wurde.

Beim Einlageelement 6 handelt es sich um eine resp. in diesem spezifischen Fall um zwei Flächenelemente, ein oberes Flächenelement 7 und ein unteres Flächenelement 8, welche als in entgegengesetzte radiale Richtung durchbogene Blattfedern ausgebildet sind. Diese beiden flächigen Blattfedern, welche sich im Wesentlichen über die gesamte Verlaufslänge der Nut erstrecken, sind an den aneinandergrenzenden Flächen über eine Haftvermittlerschicht 9 miteinander verklebt. Es handelt sich bei dieser Haftvermittlerschicht um eine Schicht aus einem Kleber, welcher seine Klebewirkung bei Überschreiten einer bestimmten Temperatur im Wesentlichen verliert. Bei diesem Kleber kann es sich bspw. um ein Harz handeln oder eine ähnliche polymere Komponente, deren Schmelzpunkt resp. Glasübergangspunkt bei einer Temperatur liegt, wie sie bei der Montage kurzzeitig eingestellt werden kann.

Als Alternative ist es auch möglich, die beiden Blattfedern 7, 8 über andere Mittel miteinander zu verbinden, so dass diese Mittel nach dem Einlegen des Einlageelementes 6 gezielt gelöst werden können. So ist es bspw. möglich, eine Verbindung vorzusehen, welche durch mechanische Vibrationen, Schockwellen, elektromagnetische Wellen (bspw. Mikrowellen, ultraviolette, sichtbare oder IR-Strahlung) oder durch eine chemische Reaktion (bspw. Zugabe von Wasser, Lösungsmittel oder Säure) in der Haltewirkung aufgelöst werden können. Es kann sich also nicht nur um einen Stoffschluss unter zu Hilfenahme einer Haftvermittlerschicht handeln, sondern es ist auch möglich, entsprechende Schrauben, Nieten, Bolzen etc. vorzusehen, welche sich unter den oben genannten Einwirkungen lösen resp. auflösen.

In der Darstellung gemäss Figur 1 verbleibt zwischen dem Einlageelement 6 und dem Keil ein Freiraum 5. Dieser ist zu Illustrationszwecken sehr gross dargestellt, normalerweise versucht man, diesen Freiraum nicht allzu gross zu gestalten, damit nicht schon bei der Montage viel Federweg gewissermassen verbraucht wird.

Nach dem Einlegen und Zusammensetzen der einzelnen Elemente in der Nut wird nun in einem abschliessenden Schritt die Verbindung zwischen den beiden Blattfedern 7, 8 aufgelöst, das heisst der Aufbau wird bspw. auf eine Temperatur erhöht, so dass der Kleber resp. die Kleberschicht 9 ihre Haftwirkung verliert und entsprechend die beiden Blattfedern 7 und 8 eine Spannung einerseits gegen die Oberseite der Leiterstäbe 4 und andererseits gegen die Unterseite des Keils 3 aufbauen.

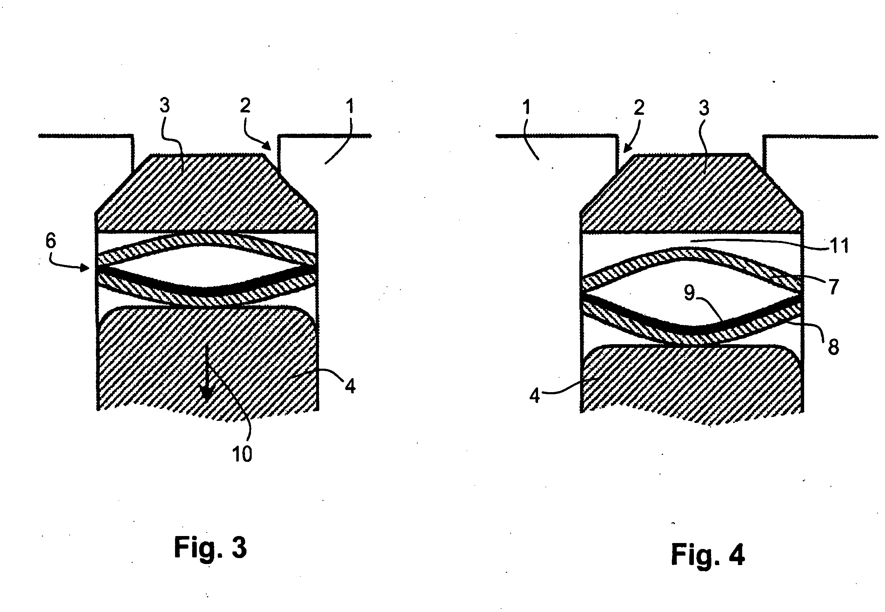

Beim Betrieb oder bei nachgeschalteten weiteren Bearbeitungsprozessen des Stators geschieht es nun häufig, dass sich, wie dies in den Figuren 3 und 4 dargestellt ist, das Paket von Leiterstäben weiter zum Nutboden absenkt. Dies kann einerseits durch eine Umordnung der Leiter in Folge der mechanischen Vibrationen resp. auf die Leiterstäbe wirkenden Kräfte geschehen, oder durch eine Veränderung der Isolationsschichten, das heisst eine Deformation, ein Schrumpfen etc. der Isolationsschichten um die Leiter. Entsprechend senken sich unter dem Pressdruck des entspannten Einlageelementes 6 die Leiterstäbe 4 in einer Absenkbewegung tiefer zum Nutboden ab. Teilweise kann dieses weitere Absenken aufgefangen werden durch den restlichen Federweg des Einlageelementes 6, die Spannung wird aber auf jeden Fall abnehmen und im ungünstigsten Fall, wie dies in Figur 4 dargestellt ist, wird das Einlageelement 6 in einem Mass entspannt, dass die Blattfedern im völlig entspannten Zustand nicht einmal mehr einen Kontakt zwischen den Leiterstäben 4 und der Unterseite des Keiles gewährleisten können. Im schlimmsten Fall bildet sich also ein Abstand 11, welcher entweder beim Keil oder bei den Leiterstäben angeordnet sein kann, und welcher zu einer ungenügenden Fixierung der Leiterstäbe 4 in der Nut 2 führt.

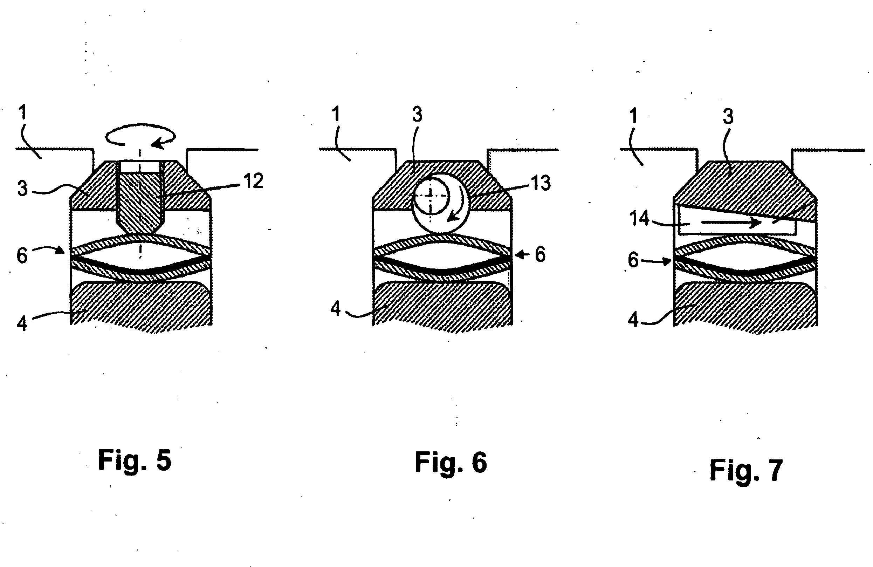

Diesem Problem kann begegnet werden, indem nun in einem nachträglichen Schritt, wobei dieser Schritt entweder bereits unmittelbar nach der Montage ausgelöst werden kann oder aber auch erst im Rahmen von Unterhaltsarbeiten, die Spannung im Einlageelement wieder erstellt oder erhöht wird. Dies wird durch ein Spannelement bewirkt, welches im resp. am Keil 3 angeordnet ist. Alternativ kann das Spannelement auch im respektive am Einlageelement angeordnet sein. In den Figuren 5 bis 7 sind unterschiedliche mögliche Ausführungsbeispiele von derartigen Spannelementen dargestellt.

In Figur 5 ist die Möglichkeit vorgesehen, im Keil, das heisst in einer Durchgangsbohrung mit Gewinde im Keil, Schrauben oder, wie hier dargestellt, Gewindebolzen 12 einzulassen, über welche gezielt wieder ein Kontakt zwischen der Unterseite des Keiles und der Oberseite des Einlageelementes 6 hergestellt werden kann resp. die Spannung des Einlageelementes wieder erhöht und aufgebaut werden kann. Das Spannelement resp. in diesem Fall der Gewindebolzen 12 dient also dazu, die Distanz zwischen dem Keil 3 und der oberen Blattfeder 7 wieder zu erniedrigen und entsprechend die Spannung wieder herzustellen und/oder zu erhöhen.

Eine alternative Ausführungsform ist in Figur 6 dargestellt. Hier ist das Spannelement als Exzenter 13 ausgebildet, welcher ebenfalls ermöglicht, den Abstand zwischen der unteren Ebene des Keiles und dem oberen Flächenelement 7 zu erniedrigen. Ein derartiger Exzenter kann bspw. seitlich der Nut zugänglich sein.

Eine dritte Ausführungsform ist in Figur 7 dargestellt. Hier wird die Unterseite des Keiles 3 entweder senkrecht zur Verlaufsrichtung der Nut wie in Figur 7 dargestellt oder parallel zur Verlaufsrichtung der Nut geneigt ausgestaltet, und es wird ein zusätzlicher Spannkeil 14 vorgesehen, welcher wiederum den Abstand zwischen der Unterseite des Keiles und der oberen Blattfeder 7 zu reduzieren ermöglicht.

Diese verschiedenen Ausführungsformen des Spannelements 12, 13, 14 gemäss den Figuren 5 bis 7 können auch kombiniert eingesetzt werden, so ist es bspw. möglich, am in Verlaufsrichtung terminalen Ende bspw. jeweils einen Spannkeil vorzusehen, da man an diesen Stellen unter Umständen besser zugreifen kann. Im mittleren Bereich kann über die Verlaufsrichtung der Nut eine Mehrzahl von in einer oder mehreren Reihen angeordneten Gewindebolzen 12 angeordnet sein, über welche, gegebenenfalls auch in unterschiedlichem Masse an unterschiedlichen Stellen entlang der Nut, die Spannung des Einlageelementes wieder eingestellt werden kann. So kann bspw. die Spannung über den Verlauf der Nut im Wesentlichen konstant gehalten werden, indem mit einem Drehmomentschlüssel an den verschiedenen Gewindebolzen eine gleiche Kraft eingestellt wird.

Unter anderem ergeben sich in Folge der oben beschriebenen Erfindung wenigstens die folgenden Vorteile:
- Reduktion der Zeit und der Kosten für den Zusammenbau bei der Herstellung von Generatoren und Motoren, da der langwierige Zusammenbau von Federelementen nach dem Stand der Technik vermieden werden kann und der Kraftaufbau erst durch ein Erhitzen erfolgt, wenn die Leiter bereits eingelegt und die Keile bereits eingefügt sind.
- Reduktion der Betriebskosten, da die Serviceintervalle ausgedehnt werden können wegen des längeren möglichen Federweges in der Keilanordnung, entsprechend kann ein Absenken der Leiterstäbe über eine längere Zeitdauer kompensiert werden.
- Reduktion von Zeit und Kosten für das Auseinandernehmen resp. das Zusammenbauen in der Unterhalt-/Reparaturphase von elektrischen Maschinen, da ein Nachspannen der Federn durchgeführt werden kann ohne dass irgend welche Teile entfernt werden müssen und bspw. die Keile heraus geschoben werden müssen.

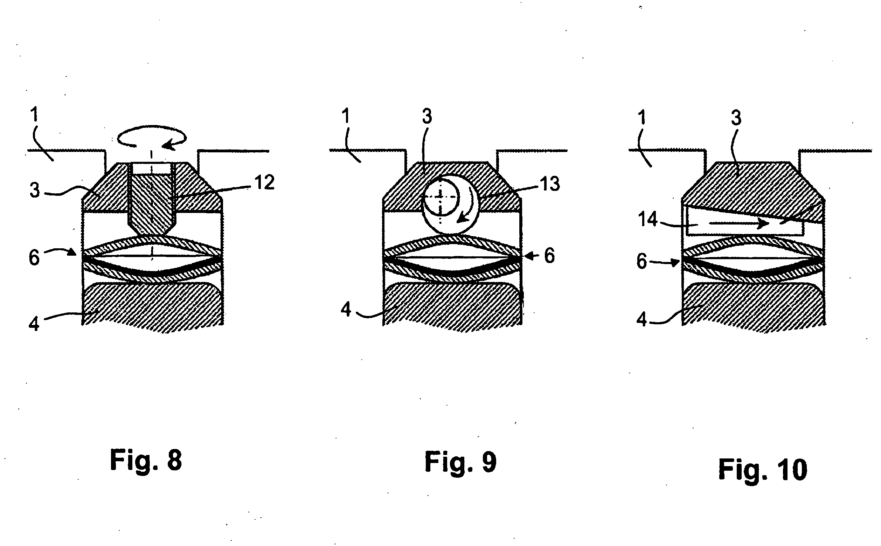

In einer in den Fig. 8-10 dargestellten Ausführungsform des Einlageelements 6 wird dieses Einlageelement nicht durch eine oder mehrere Blattfedern sondern durch mehrere Tellerfedern ausgebildet. Das Einlageelement 6 gemäss der Beschreibung der Fig. 8-10 wird analog zum Einlageelement gemäss der Beschreibung der Fig. 1-7 verwendet.

Beim Einlageelement 6 wie in Fig. 8-10 dargestellt, handelt es sich um mehrere in Richtung der Nut 2 hintereinander angeordnete Tellerfederpaare, wobei in Fig. 8-10 je ein Tellerfederpaar in Schnittansicht dargestellt ist. Jedes Tellerfederpaar weist wiederum - wie das Einlageelement gemäss Fig. 1-7 - zwei Flächenelemente auf, wobei die eine Tellerfeder ein oberes Flächenelement 7 und die andere Tellerfeder ein unteres Flächenelement 8 bildet. Die zwei Tellerfedern jedes Tellerfederpaars sind in entgegengesetzter Richtung durchgebogen beziehungsweise vorgespannt. Beim Einlegen der Tellerfederpaare in die Nut 2 sind die Tellerfedern jedes Tellerfedernpaars an den aneinandergrenzenden Flächen über eine Haftvermittlerschicht 9 miteinander derart verklebt, dass das Tellerfederpaar im Wesentlichen eben ist und somit die beiden Tellerfedern vorgespannt sind. Es handelt sich bei dieser Haftvermittlerschicht um eine Schicht aus einem Kleber, welcher seine Klebewirkung bei Überschreiten einer bestimmten Temperatur im Wesentlichen verliert. Bei diesem Kleber kann es sich bspw. um ein Harz handeln oder eine ähnliche polymere Komponente, deren Schmelzpunkt resp. Glasübergangspunkt bei einer Temperatur liegt, wie sie bei der Montage kurzzeitig eingestellt werden kann.

Als Alternative ist es auch möglich, die beiden Tellerfedern 7, 8 jedes Tellerfedernpaars über andere Mittel miteinander zu verbinden, so dass diese Mittel nach dem Einlegen des Einlageelementes 6 gezielt gelöst werden können. So ist es bspw. möglich, eine Verbindung vorzusehen, welche durch mechanische Vibrationen, Schockwellen, elektromagnetische Wellen (bspw. Mikrowellen, ultraviolette, sichtbare oder IR-Strahlung) oder durch eine chemische Reaktion (bspw. Zugabe von Wasser, Lösungsmittel oder Säure) in der Haltewirkung aufgelöst werden können. Es kann sich also nicht nur um einen Stoffschluss unter zu Hilfenahme einer Haftvermittlerschicht handeln, sondern es ist auch möglich, entsprechende Schrauben, Nieten, Bolzen etc. vorzusehen, welche sich unter den oben genannten Einwirkungen lösen resp. auflösen.

Die im Keil 3 angeordneten Spannelemente 12-14 sind bezüglich den Tellerfedernpaaren derart angeordnet, dass jedes Spannelement 12-14 mit einem Tellerfedernpaar zusammenwirkt, um die Spannung des Tellerfedernpaares einzustellen, insbesondere um die Spannung wieder zu erstellen oder zu erhöhen.

### BEZUGSZEICHENLISTE

- 1: Stator
- 2: Nut
- 3: Keil
- 4: Leiterstäbe, Wicklungen
- 5: Freiraum
- 6: Einlageelement
- 7: oberes Flächenelement von 6
- 8: untere Flächenelement von 6
- 9: Haftvermittlerschicht
- 10: Absenkbewegung
- 11: Abstand
- 12: Spannelement, Gewindebolzen
- 13: Spannelement, Exzenter
- 14: Spannelement, Spannkeil

## Patentansprüche

1. Verfahren zur Fixierung von Leiterstäben (4) in einer Nut (2) in einem Stator (1) oder einem Rotor einer elektrischen Maschine oder eines Generators, bei welchem ein oder mehrere Leiterstäbe (4) in die Nut (2) eingelegt werden, dann wenigstens ein vorgespanntes Einlageelement (6) in die Nut (2) eingebracht wird, wobei das Einlageelement (6) ein oberes Flächenelement (7) und ein unteres Flächenelement (8) umfasst,
und wobei das obere Flächenelement (7) und das untere Flächenelement (8) im vorgespannten Zustand des Einlageelements (6) jeweils als zueinander in entgegengesetzte radiale Richtung durchbogene flächige Federelemente ausgebildet sind, welche über eine lösbare Haftvermittlerschicht (9) zusammengehalten werden,
wobei dann die Nut (2) durch im Bereich der Nutöffnung angeordnete Keile (3) geschlossen wird,
und anschliessend das Einlageelement (6) derart freigegeben wird, dass sich die beiden Flächenelement (7,8) in entgegengesetzter radialer Richtung voneinander wegbiegen und dadurch eine gegen die Leiterstäbe (4) wirkende Spannung aufbaubar ist, so dass die Leiterstäbe (4) über das entspannte Einlageelement (6) vom Keil (3) in die Nut (2) gepresst werden.

2. Verfahren nach Anspruch 1, **dadurch gekennzeichnet, dass** anschliessend in einem zusätzlichen Schritt ein Spannelement (12, 13,14) im oder am Keil (3) und/oder im oder am Einlageelement (6) derart verschoben und/oder verdreht wird, dass ein gegebenenfalls vorhandener Abstand (11) zwischen Keil (3) und Einlageelement (6) durch dieses Spannelement überbrückt wird und/oder die Spannung des Einlageelementes (6) erhöht wird.

3. Verfahren nach Anspruch 2, **dadurch gekennzeichnet, dass** es sich beim Spannelement (12-14) um einen oder mehrere im wesentlichen in Nutrichtung im Keil (3) in einer oder mehreren Gewindebohrungen eingelassene Gewindebolzen (12) oder Schrauben handelt, welche in Richtung Nutboden angeschraubt werden.

4. Verfahren nach einem der vorhergehenden Ansprüche, **dadurch gekennzeichnet, dass** es sich beim Spannelement (12, 13, 14) um einen oder mehrere im oder am Keil (3) angeordnete Exzenter (13) handelt, welcher verdreht wird.

5. Verfahren nach einem der vorhergehenden Ansprüche, **dadurch gekennzeichnet, dass** der Keil (3) auf seiner dem Nutboden zugewandten Unterseite wenigstens abschnittsweise eine geneigte untere Fläche aufweist, und dass es sich beim Spannelement (12-14) um einen ebenfalls mit einer gegenläufig geneigten, der geneigten Fläche des Keiles (3) zugewandten oberen Fläche ausgebildeten Spannkeil (14) handelt, welcher eingeschoben wird, und/oder dass das Einlageelement (6) auf seiner dem Nutboden abgewandten Oberseite wenigstens abschnittsweise eine geneigte obere Fläche aufweist, und dass es sich beim Spannelement (12-14) um einen ebenfalls mit einer gegenläufig geneigten, der geneigten Fläche des Einlageelementes (3) zugewandten unteren Fläche ausgebildeten Spannkeil (14) handelt, welcher eingeschoben wird.

6. Verfahren nach einem der vorhergehenden Ansprüche, **dadurch gekennzeichnet, dass** sich das Einlageelement (6) in Verlaufsrichtung der Nut (2) erstreckt.

7. Verfahren nach einem der vorhergehenden Ansprüche, **dadurch gekennzeichnet, dass** es sich beim Einlageelement (6) um ein Element umfassend ein oberes Flächenelement (7) und ein unteres Flächenelement (8) handelt, wobei wenigstens eines dieser Flächenelemente (7, 8) als parallel oder senkrecht zur Verlaufsrichtung der Nut (2) ein oder mehrfach gewellte Blattfeder ausgebildet ist, und wobei diese Blattfeder im vorgespannten Zustand im wesentlichen flach ausgebildet ist, wobei vorzugsweise beide Flächenelemente (7, 8) als in entgegen gesetzter Richtung gewellte Blattfeder ausgebildet sind.

8. Verfahren nach einem der Ansprüche 1-6, **dadurch gekennzeichnet, dass** das Einlageelement (6) ein oder mehrere Elemente aufweist, von welchen jedes ein oberes Flächenelement (7) und ein unteres Flächenelement (8) aufweist, wobei wenigstens eines dieser Flächenelemente (7, 8) als Tellerfeder ausgebildet ist, und wobei diese Tellerfeder im vorgespannten Zustand im wesentlichen flach ausgebildet ist, wobei vorzugsweise beide Flächenelemente (7, 8) als Tellerfedern ausgebildet sind,

9. Verfahren nach Anspruch 8, **dadurch gekennzeichnet, dass** die mehreren Elemente in Verlaufsrichtung der Nut (2) hintereinander angeordnet sind.

10. Verfahren nach einem der Ansprüche 7 bis 9, **dadurch gekennzeichnet, dass** die beiden Flächenelemente (7, 8) im vorgespannten Zustand über eine durch wenigstens eine Einwirkung, insbesondere bevorzugt durch Wärmeeinwirkung, lösbare Haflvermittlerschicht, Schraube(n), Niete(n), Klammer(n) und oder eine Kombination davon, zusammengehalten werden.

11. Verfahren nach einem der vorhergehenden Ansprüche, **dadurch gekennzeichnet, dass** der zusätzliche Schritt erst dann durchgeführt wird, wenn sich die durch das Einlageelement (6) gewährleistete Spannung zwischen Leiterstäben (4) und Keil (3) durch Gebrauch und/oder Weiterbearbeitung von Stator oder Rotor abgebaut hat.

12. Verfahren nach einem der vorangehenden Ansprüche, **dadurch gekennzeichnet, dass** die Spannung des Einlageelements (6) durch Einwirkung von Wärme, mechanische Vibrationen, durch Einwirkung von Schockwellen und/oder durch eine chemische Reaktion freigegeben werden kann.

13. Einlageelement (6) zur Fixierung von Leiterstäben (4) in einer Nut (2) in einem Stator oder einem Rotor einer elektrischen Maschine oder eines Generators,
**dadurch gekennzeichnet** das Einlageelement (6) ein oberes Flächenelement (7) und ein unteres Flächenelement (8) umfasst,
wobei das obere Flächenelement (7) und das untere Flächenelement (8) im vorgespannten Zustand des Einlageelements (6) jeweils als zueinander in entgegengesetzte radiale Richtung durchbogene flächige Federelemente ausgebildet sind, welche über eine lösbare Haftvermittlerschicht (9) zusammengehalten werden,
und wobei das Einlageelement (6) in einem in die Nut (2) eingebrachten Zustand derart freigegeben werden kann, dass sich die beiden Flächenelement (7,8) in entgegengesetzter radialer Richtung voneinander wegbiegen und dadurch eine gegen die Leiterstäbe (4) wirkende Spannung aufbaubar ist, so dass ein gegebenenfalls vorhandener Freiraum (5) zwischen Leiterstäben (4) und Keil (3) durch das freigegebene Einlageelement (6) wenigstens teilweise überbrückbar ist und die Leiterstäbe (4) über das entspannte Einlageelement (6) in der Nut (2) fixierbar sind.

14. Einlageelement (6) nach Anspruch 13, **dadurch gekennzeichnet, dass** mindestens eines der flächigen Federelemente (7, 8) als Tellerfeder ausgebildet ist.

15. Einlageelement (6) nach Anspruch 13, **dadurch gekennzeichnet, dass** mindestens eines der flächigen Federelemente (7, 8) als Blattfeder. ausgebildet ist.

16. Einlageelement (6) nach Anspruch 15, **dadurch gekennzeichnet, dass** mindestens eines der flächigen Federelemente (7, 8) als eine gewellte Blattfeder ausgebildet ist.

17. Einlageelement (6) nach einem der Ansprüche 13 bis 16, **dadurch gekennzeichnet, dass** die Haftvermittlerschicht einen Kleber umfasst, welcher seine Haftwirkung beim Überschreiten einer bestimmten Temperatur verliert.

18. Stator oder Rotor, bei welchem ein oder mehrere Leiterstäbe (4) in eine Nut (2) eingelegt sind, und mit einem Keil (2) und einem Einlageelement (6) nach einem der Ansprüche 13 bis 17.

19. Stator oder Rotor nach Anspruch 18, **dadurch gekennzeichnet, dass** im Keil (3) oder am Keil (3) resp. im Einlageelement (6) oder am Einlageelement (6) ein Spannelement (12, 13, 14) derart verschieblich und/oder verdrehbar angeordnet ist, dass die Spannung des Einlageelementes (6) erhöht werden kann.

20. Stator oder Rotor nach Anspruch 19, **dadurch gekennzeichnet, dass** es sich beim Spannelement (12, 13, 14) um einen oder mehrere im wesentlichen in Nutrichtung im Keil (3) in einer oder mehreren Gewindebohrungen eingelassene Gewindebolzen (12) oder Schrauben handelt, welche in Richtung Nutboden angeschraubt werden können.

21. Stator oder Rotor nach Anspruch 19, **dadurch gekennzeichnet, dass** es sich beim Spannelement (12, 13, 14) um einen oder mehrere im oder am Keil (3) angeordneten Exzenter (13) handelt, welcher verdreht werden kann.

22. Stator oder Rotor nach Anspruch 19, **dadurch gekennzeichnet, dass** der Keil (3) auf seiner dem Nutboden zugewandten Unterseite wenigstens abschnittsweise eine geneigte untere Fläche aufweist, und dass es sich beim Spannelement (12-14) um einen ebenfalls mit einer gegenläufig geneigten, der geneigten Fläche des Keiles (3) zugewandten oberen Fläche ausgebildeten Spannkeil (14) handelt, welcher eingeschoben werden kann.

## Claims

1. Method for fixing conductor bars (4) in a groove (2) in a stator (1) or a rotor of an electrical machine or of a generator, wherein one or more conductor bars (4) are inserted into the groove (2), then at least one pretensioned insert element (6) is introduced into the groove (2), wherein the insert element (6) comprises an upper surface element (7) and a lower surface element (8),
and wherein the upper surface element (7) and the lower surface element (8), in the pretensioned state of the insert element (6), are formed in each case as planar spring elements which are flexed in opposite directions to one another in the radial direction and are held together via a detachable adhesion promoter layer (9),
wherein the groove (2) is then closed by wedges (3) arranged in the region of the groove opening, and subsequently the insert element (6) is released such that the two surface elements (7, 8) bend away from one another in opposite radial directions and as a result a tension acting against the conductor bars (4) can be built up so that the conductor bars (4) are pressed by the wedge (3) into the groove (2) via the relaxed insert element (6).

2. Method according to Claim 1, **characterized in that** subsequently in an additional step a tensioning element (12, 13, 14) in or on the wedge (3) and/or in or on the insert element (6) is displaced and/or turned such that a distance (11) possibly present between the wedge (3) and the insert element (6) is bridged by this tensioning element and/or the tension in the insert element (6) is increased.

3. Method according to Claim 2, **characterized in that** the tensioning element (12-14) is one or more threaded bolts (12) or screws which are embedded in the wedge (3) substantially in the groove direction in one or more threaded bores and are screwed in the direction of the groove bottom.

4. Method according to one of the preceding claims, **characterized in that** the tensioning element (12, 13, 14) is one or more eccentrics (13) which are arranged in or on the wedge (3) and are turned.

5. Method according to one of the preceding claims, **characterized in that** the wedge (3) has, at least sectionally, an inclined lower surface on its underside facing the groove bottom, and **in that** the tensioning element (12-14) is a tensioning wedge (14) which is formed likewise with an upper surface that is inclined in the opposite direction and faces the inclined surface of the wedge (3), and which is pushed in, and/or **in that** the insert element (6) has, at least sectionally, an inclined upper surface on its top side remote from the groove bottom, and **in that** the tensioning element (12-14) is a tensioning wedge (14) which is formed likewise with a lower surface that is inclined in the opposite direction and faces the inclined surface of the insert element (6), and which is pushed in.

6. Method according to one of the preceding claims, **characterized in that** the insert element (6) extends in the running direction of the groove (2).

7. Method according to one of the preceding claims, **characterized in that** the insert element (6) is an element comprising an upper surface element (7) and a lower surface element (8), wherein at least one of these surface elements (7, 8) is formed as a leaf spring which has one or more corrugations and extends parallel or perpendicularly to the running direction of the groove (2), and wherein this leaf spring is formed in a substantially flat manner in the pretensioned state, wherein preferably both surface elements (7, 8) are formed as leaf springs that are corrugated in opposite directions.

8. Method according to one of Claims 1-6, **characterized in that** the insert element (6) has one or more elements, each of which has an upper surface element (7) and a lower surface element (8), wherein at least one of these surface elements (7, 8) is formed as a plate spring, and wherein this plate spring is formed in a substantially flat manner in the pretensioned state, wherein preferably both surface elements (7, 8) are formed as plate springs.

9. Method according to Claim 8, **characterized in that** the plurality of elements are arranged in succession in the running direction of the groove (2).

10. Method according to one of Claims 7 to 9, **characterized in that** the two surface elements (7, 8) are held together in the pretensioned state via an adhesion promoter layer that is detachable under at least one effect, in particular preferably under the effect of heat, via screw(s), rivet(s), clamp(s) and/or a combination thereof.

11. Method according to one of the preceding claims, **characterized in that** the additional step is carried out only when the tension, ensured by the insert element (6), between the conductor bars (4) and the wedge (3) has reduced through use and/or further processing of the stator or rotor.

12. Method according to one of the preceding claims, **characterized in that** the tension in the insert element (6) can be released under the effect of heat, mechanical vibrations, under the effect of shock waves and/or by way of a chemical reaction.

13. Insert element (6) for fixing conductor bars (4) in a groove (2) in a stator or a rotor of an electrical machine or of a generator, **characterized in that** the insert element (6) comprises an upper surface element (7) and a lower surface element (8),
wherein the upper surface element (7) and the lower surface element (8), in the pretensioned state of the insert element (6), are formed in each case as planar spring elements which are flexed in opposite directions to one another in the radial direction and are held together via a detachable adhesion promoter layer (9),
and wherein the insert element (6), in a state introduced into the groove (2), can be released such that the two surface elements (7, 8) bend away from one another in opposite radial directions and as a result a tension acting against the conductor bars (4) can be built up so that an optionally present free space (5) between the conductor bars (4) and the wedge (3) is at least partially bridged by the released insert element (6) and the conductor bars (4) are fixable in the groove (2) via the relaxed insert element (6).

14. Insert element (6) according to Claim 13, **characterized in that** at least one of the planar spring elements (7, 8) is formed as a plate spring.

15. Insert element (6) according to Claim 13, **characterized in that** at least one of the planar spring elements (7, 8) is formed as a leaf spring.

16. Insert element (6) according to Claim 15, **characterized in that** at least one of the planar spring elements (7, 8) is formed as a corrugated leaf spring.

17. Insert element (6) according to one of Claims 13 to 16, **characterized in that** the adhesion promoter layer comprises an adhesive which loses its adhesive action when a particular temperature is exceeded.

18. Stator or rotor, in which one or more conductor bars (4) are inserted into a groove (2), and having a wedge (3) and an insert element (6) according to one of Claims 13 to 17.

19. Stator or rotor according to Claim 18, **characterized in that** a tensioning element (12, 13, 14) is arranged in a displaceable and/or turnable manner in the wedge (3) or on the wedge (3) and/or in the insert element (6) or on the insert element (6), such that the tension in the insert element (6) can be increased.

20. Stator or rotor according to Claim 19, **characterized in that** the tensioning element (12, 13, 14) is one or more threaded bolts (12) or screws which are embedded in the wedge (3) substantially in the groove direction in one or more threaded bores and can be screwed in the direction of the groove bottom.

21. Stator or rotor according to Claim 19, **characterized in that** the tensioning element (12, 13, 14) is one or more eccentrics (13) which are arranged in or on the wedge (3) and can be turned.

22. Stator or rotor according to Claim 19, **characterized in that** the wedge (3) has, at least sectionally, an inclined lower surface on its underside facing the groove bottom, and **in that** the tensioning element (12-14) is a tensioning - wedge (14) which is formed likewise with an upper surface that is inclined in the opposite direction and faces the inclined surface of the wedge (3), and which can be pushed in.

## Revendications

1. Procédé pour fixer des barres conductrices (4) dans une encoche (2) dans un stator (1) ou un rotor d'une machine électrique ou d'un générateur, selon lequel une ou plusieurs barres conductrices (4) sont insérées dans l'encoche (2), puis au moins un élément d'insertion précontraint (6) est introduit dans l'encoche (2), l'élément d'insertion (6) comportant un élément plan supérieur (7) et un élément plan inférieur (8),
et l'élément plan supérieur (7) ainsi que l'élément plan inférieur (8), à l'état précontraint de l'élément d'insertion (6), étant réalisés respectivement sous forme d'éléments plans formant ressort fléchis l'un par rapport à l'autre dans des directions radiales opposées, lesquels éléments formant ressort étant maintenus ensemble au moyen d'une couche amovible d'agent d'adhérence (9),
l'encoche (2) étant fermée par des cales (3) disposées dans la région de l'ouverture de l'encoche,
et ensuite l'élément d'insertion (6) est relâché de telle sorte que les deux éléments plans (7, 8) fléchissent à l'écart l'un de l'autre dans des directions radiales opposées et une contrainte agissant à l'encontre des barres conductrices (4) peut ainsi être établie, de sorte que les barres conductrices (4) soient pressées dans l'encoche (2) par la cale (3), par l'intermédiaire de l'élément d'insertion (6) sans contrainte.

2. Procédé selon la revendication 1, **caractérisé en ce qu'**ensuite, lors d'une étape supplémentaire, on fait glisser et/ou tourner un élément de serrage (12, 13, 14) dans ou sur la cale (3) et/ou dans ou sur l'élément d'insertion (6) de telle sorte qu'un espacement (11) éventuellement présent entre la cale (3) et l'élément d'insertion (6) soit enjambé par cet élément de serrage et/ou que la contrainte de l'élément d'insertion (6) soit accrue.

3. Procédé selon la revendication 2, **caractérisé en ce que** l'élément de serrage (12-14) consiste en un ou plusieurs goujons filetés (12) ou vis encastrés, essentiellement dans la direction de l'encoche, dans un ou plusieurs alésages filetés dans la cale (3), lesquels goujons filetés ou vis sont vissés en direction du fond de l'encoche.

4. Procédé selon l'une quelconque des revendications précédentes, **caractérisé en ce que** l'élément de serrage (12, 13, 14) consiste en un ou plusieurs excentriques (13), que l'on fait tourner, disposés dans ou sur la cale (3).

5. Procédé selon l'une quelconque des revendications précédentes, **caractérisé en ce que** la cale (3) présente sur sa face inférieure tournée vers le fond de l'encoche, au moins par sections, une surface inférieure inclinée, et **en ce que** l'élément de serrage (12-14) est une cale de serrage (14) réalisée également avec une surface supérieure inclinée en sens inverse et tournée vers la surface inclinée de la cale (3), laquelle cale de serrage est insérée, et/ou **en ce que** l'élément d'insertion (6) présente sur sa face supérieure opposée au fond de l'encoche, au moins par sections, une surface supérieure inclinée, et **en ce que** l'élément de serrage (12-14) est une cale de serrage (14) réalisée également avec une surface inférieure inclinée en sens inverse et
tournée vers la surface incliné de l'élément d'insertion (6), laquelle cale de serrage est insérée.

6. Procédé selon l'une quelconque des revendications précédentes, **caractérisé en ce que** l'élément d'insertion (6) s'étend dans la direction d'étendue de l'encoche (2).

7. Procédé selon l'une quelconque des revendications précédentes, **caractérisé en ce que** l'élément d'insertion (6) est un élément comportant un élément plan supérieur (7) et un élément plan inférieur (8), au moins l'un de ces éléments plans (7, 8) étant réalisé sous forme de ressort à lame, à une seule ou à plusieurs ondulations, parallèlement ou perpendiculairement à la direction d'étendue de l'encoche (2), et ce ressort à lame étant réalisé de manière essentiellement plane à l'état précontraint, les deux éléments plans (7, 8) étant de préférence réalisés sous forme de ressorts à lame ondulés dans des directions opposées.

8. Procédé selon l'une quelconque des revendications 1 à 6, **caractérisé en ce que** l'élément d'insertion (6) comprend un ou plusieurs éléments parmi lesquels chacun comprend un élément plan supérieur (7) et un élément plan inférieur (8), au moins l'un de ces éléments plans (7, 8) étant réalisé sous forme de ressort Belleville et ce ressort Belleville étant réalisé de manière essentiellement plane à l'état précontraint, les deux éléments plans (7, 8) étant de préférence réalisés sous forme de ressorts Belleville.

9. Procédé selon la revendication 8, **caractérisé en ce que** les multiples éléments sont disposés les uns derrière les autres dans la direction d'étendue de l'encoche (2).

10. Procédé selon l'une quelconque des revendications 7 à 9, **caractérisé en ce que** les deux éléments plans (7, 8) sont maintenus ensemble, à l'état précontraint, au moyen d'une couche d'agent d'adhérence amovible sous au moins une influencé, en particulier de préférence sous l'influence de la chaleur, d'une/de vis, d'un/de rivet(s), d'une/d'agrafe(s) et/ou d'une combinaison de ceux-ci.

11. Procédé selon l'une quelconque des revendications précédentes, **caractérisé en ce que** l'étape supplémentaire n'est effectuée que si la contrainte entre les barres conductrices (4) et la cale (3), assurée par l'élément d'insertion (6), a diminué du fait de l'utilisation et/ou d'un traitement ultérieur du stator ou du rotor.

12. Procédé selon l'une quelconque des revendications précédentes, **caractérisé en ce que** la contrainte de l'élément d'insertion (6) peut être relâchée sous l'influence de la chaleur, de vibrations mécaniques, sous l'influence d'ondes de choc et/ou par une réaction chimique.

13. Élément d'insertion (6) pour fixer des barres conductrices (4) dans une encoche (2) dans un stator ou un rotor d'une machine électrique ou d'un générateur, **caractérisé en ce que** l'élément d'insertion (6) comporte un élément plan supérieur (7) et un élément plan inférieur (8),
l'élément plan supérieur (7) ainsi que l'élément plan inférieur (8), à l'état précontraint de l'élément d'insertion (6), étant réalisés respectivement sous forme d'élémènts plans formant ressort fléchis l'un par rapport à l'autre dans des directions radiales opposées, lesquels éléments formant ressort étant maintenus ensemble au moyen d'une couche amovible, d'agent d'adhérence (9),
et l'élément d'insertion (6) étant relâché dans un état introduit dans l'encoche (2) de telle sorte que les deux éléments plans (7, 8) fléchissent à l'écart l'un de l'autre dans des directions radiales opposées et qu'une contrainte agissant à l'encontre des barres conductrices (4) puisse ainsi être établie, de sorte qu'un espace libre (5) éventuellement présent entre les barres conductrices (4) et la cale (3) puisse être enjambé au moins partiellement par l'élément d'insertion relâché (6) et que les barres conductrices (4) puissent être fixées dans l'encoche (2) au moyen de l'élément d'insertion (6) sans contrainte.

14. Élément d'insertion (6) selon la revendication 13, **caractérisé en ce qu'**au moins l'un des éléments plans formant ressort (7, 8) est réalisé sous forme de ressort Belleville.

15. Élément d'insertion (6) selon la revendication 13, **caractérisé en ce qu'**au moins l'un des éléments plans formant ressort (7, 8) est réalisé sous forme de ressort à lame.

16. Élément d'insertion (6) selon la revendication 15, **caractérisé en ce qu'**au moins l'un des éléments plans formant ressort (7, 8) est réalisé sous la forme d'un ressort à lame ondulé.

17. Élément d'insertion (6) selon l'une quelconque des revendications 13 à 16, **caractérisé en ce que** la couche d'agent d'adhérence comporte un adhésif qui perd son adhésivité lorsqu'une température déterminée est dépassée.

18. Stator ou rotor, dans lequel une ou plusieurs barres conductrices (4) sont insérées dans une encoche (2), et comprenant une cale (3) et un élément d'insertion (6) selon l'une quelconque des revendications 13 à 17.

19. Stator ou rotor selon la revendication 18, **caractérisé en ce qu'**un élément de serrage (12, 13, 14) est disposé de manière à pouvoir glisser et/ou tourner dans la cale (3) ou sur la cale (3), respectivement dans l'élément d'insertion (6) ou sur l'élément d'insertion (6), de telle sorte que la contrainte de l'élément d'insertion (6) puisse être accrue.

20. Stator ou rotor selon la revendication 19, **caractérisé en ce que** l'élément de serrage (12, 13, 14) consiste en un ou plusieurs goujons filetés (12) ou vis encastrés, essentiellement dans la direction de l'encoche, dans un ou plusieurs alésages filetés dans la cale (3), lesquels goujons filetés ou vis sont vissés en direction du fond de l'encoche.

21. Stator ou rotor selon la revendication 19, **caractérisé en ce que** l'élément de serrage (12, 13, 14) consiste en un ou plusieurs excentriques (13), que l'on peut faire tourner, disposés dans ou sur la cale (3).

22. Stator ou rotor selon la revendication 19, **caractérisé en ce que** la cale (3) présente sur sa face inférieure tournée vers le fond de l'encoche, au moins par sections, une surface inférieure inclinée, et **en ce que** l'élément de serrage (12-14) est une cale de serrage (14) réalisée également avec une surface supérieure inclinée en sens inverse et tournée vers la surface inclinée de la cale (3), laquelle cale de serrage peut être insérée.
